# EUROPEAN PATENT APPLICATION

(11) **EP 1 411 671 A1**
(43) Date of publication of application: **21.04.2004**
(21) Application number: 02722831.1
(22) Date of filing: 26.04.2002
(51) Int. Cl.: H04L 12/28

(54) **DEVICE GROUPING SYSTEM, RECEPTION APPARATUS, MANAGEMENT APPARATUS, DEVICE GROUPING METHOD, PROGRAM, AND MEDIUM**

(30) Priority: 23.07.2001 JP 2001222217
(71) Applicant: MATSUSHITA ELECTRIC INDUSTRIAL CO., LTD., Kadoma-shi, Osaka 571-8501 (JP)
(72) Inventor: YAMAMOTO, Mutsuko, Yao-shi, Osaka 581-0015 (JP); MAEKAWA, Hajime, Osaka-shi, Osaka 547-0005 (JP); YANAGAWA, Yoshifumi, Kyoto-shi, Kyoto 607-8345 (JP); SAGA, Masaki, Suita-shi, Osaka 565-0821 (JP)
(74) Representative: Grünecker, Kinkeldey, Stockmair & Schwanhäusser Anwaltssozietät
(86) International application number: PCT/JP2002/004230
(87) International publication number: WO 2003/010926

(57) **Abstract**

For devices connected to a network using IEEE 1394 or the like, it has not been possible in the prior art to automatically perform grouping of these device based on their physical location relationships. The present invention discloses a network management system which, by utilizing a plurality of infrared signals, performs grouping of devices, i.e., a VTR 104, a TV-a 105, a DVD 110, a TV-b 111, and a component system 115, connected to a network 117, wherein a TV-a infrared receiver 102, a VTR infrared receiver 103, a TV-b infrared receiver 108, a DVD infrared receiver 109, and a component system infrared receiver 116 are provided as infrared signal receiving apparatuses in the TV-a 105, the VTR 104, the DVD 110, the TV-b 111, and the component system 115, respectively, and of these devices, devices whose receiving apparatuses have received the same kind of infrared signal are grouped into the same group.

## Description

### TECHNICAL FIELD

The present invention relates to a device grouping system, a receiving apparatus, a management apparatus, a device grouping method, a program, and a medium, for performing the grouping of devices in a home networking environment for example.

### BACKGROUND ART

Conventionally, in IEEE 1394, etc. expected to be used primarily for networking AV devices, it is practiced to group networked devices based on their location relationships.

However, in IEEE 1394, while it is possible to know the node location relationships of the devices on the network, it is not possible to identify the physical locations of the devices; as a result, the user has had to manually input device location information such as "the living room on the first floor".

More specifically, in a network using IEEE 1394, if it is desired to group together "the TV in the living room on the first floor" and "the VTR in the living room on the first floor", for example, it is not possible to know whether they are really located in the same living room; as a result, it has not been possible to perform automatic grouping based on the physical location relationships of the devices.

This problem can occur not only in a network using IEEE 1394, but also in any other network environment that does not provide location information.

One method that makes it possible to identify the physical locations of networked devices is to assign IDs to electrical outlets connected to a power line or the like, as disclosed, for example, in "Communications Apparatus, Network Information Presentation Method, and Location Information Notifying Method (Japanese Patent Laid-Open No. 11-96131)", but such a method requires extensive electrical work and a lot of man-hours to implement.

### DISCLOSURE OF THE INVENTION

In view of the above problem of the prior art, it is an object of the present invention to provide a device grouping system, a receiving apparatus, a management apparatus, a device grouping method, a program, and a medium that can automatically perform device grouping based on the physical location relationships of the devices connected to a network using IEEE 1394 or the like.

A first invention of the present invention (corresponding to claim 1) is a device grouping system of performing grouping of a plurality of devices by utilizing a plurality of distinguishable kinds of infrared signals, said devices being connected to a designated network and capable of communicating with each other, wherein
a plurality of receiving apparatuses of receiving said infrared signals are provided one on the side of each of said plurality of devices, and
of said devices, devices whose receiving apparatuses have received the same kind of infrared signal are grouped into the same group.

A second invention of the present invention (corresponding to claim 2) is a device grouping system as set forth in the first invention of the present invention, wherein said plurality of kinds of infrared signals are each transmitted constantly or periodically from a designated infrared signal transmitting apparatus installed in a designated space within a building.

A third invention of the present invention (corresponding to claim 3) is a device grouping system as set forth in the first invention of the present invention, wherein said plurality of kinds of infrared signals are each transmitted, under user instruction, from a designated infrared signal transmitting apparatus carried by a user.

A fourth invention of the present invention (corresponding to claim 4) is a device grouping system as set forth in the first invention of the present invention, wherein
one or more management apparatuses of managing said devices are each provided on the side of a designated one of said plurality of devices, and
when any one of said infrared signals is received by the receiving apparatus provided in any one of said devices, data signifying said reception is sent and held on the side of the management apparatus responsible for managing said device.

A fifth invention of the present invention (corresponding to claim 5) is a device grouping system as set forth in the fourth invention of the present invention, wherein
when a prescribed operation is performed on any one of said devices by a user, a notification signifying said operation performed is sent to the management apparatus responsible for managing said device, and
said notified management apparatus, based on said sent and held data, notifies a designated one of said management apparatuses and/or a designated one of said devices that a device belonging to the same group as said device on which said prescribed operation has been performed should be operated in collaboration.

A sixth invention of the present invention (corresponding to claim 6) is a device grouping system as set forth in the first invention of the present invention, wherein when any one of said infrared signals is received by the receiving apparatus provided in any one of said devices, data signifying said reception is held on the side of said device.

A seventh invention of the present invention (corresponding to claim 7) is a device grouping system as set forth in the sixth invention of the present invention, wherein
one or more management apparatuses of managing said devices are each provided on the side of a designated one of said plurality of devices,
when a prescribed operation is performed on any one of said devices by a user, a notification signifying said operation performed is sent, together with said held data, to the management apparatus responsible for managing said device, and
said notified management apparatus, based on said sent data, notifies a designated one of said management apparatuses and/or a designated one of said devices that a device belonging to the same group as said device on which said prescribed operation has been performed should be operated in collaboration.

An eighth invention of the present invention (corresponding to claim 8) is a device grouping system as set forth in the sixth invention of the present invention, wherein when a prescribed operation is performed on any one of said devices by a user, said operated device notifies said plurality of devices that a device belonging to the same group as said operated device should be operated in collaboration with said operated device.

A ninth invention of the present invention (corresponding to claim 9) is a device grouping system as set forth in the first invention of the present invention, comprising a storage device of storing a history of reception of said infrared signals.

A tenth invention of the present invention (corresponding to claim 10) is a device grouping system as set forth in the ninth invention of the present invention, having a function of learning based on said stored history.

An eleventh invention of the present invention (corresponding to claim 11) is in a system of performing grouping of a plurality of devices by utilizing a plurality of distinguishable kinds of infrared signals, said devices being connected to a designated network and capable of communicating with each other, a receiving apparatus provided on the side of each of said plurality of devices in order to receive said infrared signals, wherein
of said devices, devices whose receiving apparatuses have received the same kind of infrared signal are grouped into the same group,
when any one of said infrared signals is received by the receiving apparatus provided in any one of said devices, data signifying said reception is sent and held on the side of one or more management apparatuses each provided on the side of a designated one of said plurality of devices in order to manage said devices, and
when a prescribed operation is performed on any one of said devices by a user, a notification signifying said operation performed is sent to the management apparatus responsible for managing said device, and said notified management apparatus, based on said sent and held data, notifies a designated.one of said management apparatuses and/or a designated one of said devices that a device belonging to the same group as said device on which said prescribed operation has been performed should be operated in collaboration.

A twelfth invention of the present invention (corresponding to claim 12) is in a system of performing grouping of a plurality of devices by utilizing a plurality of distinguishable kinds of infrared signals, said devices being connected to a designated network and capable of communicating with each other, a management apparatus provided on the side of a designated one of said plurality of devices, wherein
a plurality of receiving apparatuses of receiving said infrared signals are provided one on the side of each of said plurality of devices and, of said devices, devices whose receiving apparatuses have received the same kind of infrared signal are grouped into the same group,
when any one of said infrared signals is received by the receiving apparatus provided in any one of said devices, data signifying said reception is sent and held on the side of the management apparatus responsible for managing said device, and
when a prescribed operation is performed on any one of said devices by a user, a notification signifying said operation performed is sent to the management apparatus responsible for managing said device, and said notified management apparatus, based on said sent and held data, notifies a designated one of said management apparatuses and/or a designated one of said devices that a device belonging to the same group as said device on which said prescribed operation has been performed should be operated in collaboration.

A thirteenth invention of the present invention (corresponding to claim 13) is in a system of performing grouping of a plurality of devices by utilizing a plurality of distinguishable kinds of infrared signals, said devices being connected to a designated network and capable of communicating with each other, a receiving apparatus provided on the side of each of said plurality of devices in order to receive said infrared signals, wherein
of said devices, devices whose receiving apparatuses have received the same kind of infrared signal are grouped into the same group,
when any one of said infrared signals is received by the receiving apparatus provided in any one of said devices, data signifying said reception is held on the side of said device, and
when a prescribed operation is performed on any one of said devices by a user, a notification signifying said operation performed is sent, together with said held data, to a management apparatus responsible for managing said device among one or more management apparatuses each provided on the side of a designated one of said plurality of devices in order to manage said devices, and said notified management apparatus, based on said sent data, notifies a designated one of said management apparatuses and/or a designated one of said devices that a device belonging to the same group as said device on which said prescribed operation has been performed should be operated in collaboration.

A fourteenth invention of the present invention (corresponding to claim 14) is in a system of performing grouping of a plurality of devices by utilizing a plurality of distinguishable kinds of infrared signals, said devices being connected to a designated network and capable of communicating with each other, a management apparatus provided on the side of a designated one of said plurality of devices, wherein
a plurality of receiving apparatuses of receiving said infrared signals are provided one on the side of each of said plurality of devices and, of said devices, devices whose receiving apparatuses have received the same kind of infrared signal are grouped into the same group,
when any one of said infrared signals is received by the receiving apparatus provided in any one of said devices, data signifying said reception is held on the side of said device, and
when a prescribed operation is performed on any one of said devices by a user, a notification signifying said operation performed is sent, together with said held data, to a management apparatus responsible for managing said device among one or more management apparatuses each provided on the side of a designated one of said plurality of devices in order to manage said devices, and said notified management apparatus, based on said sent data, notifies a designated one of said management apparatuses and/or a designated one of said devices that a device belonging to the same group as said device on which said prescribed operation has been performed should be operated in collaboration.

A fifteenth invention of the present invention (corresponding to claim 15) is in a system of performing grouping of a plurality of devices by utilizing a plurality of distinguishable kinds of infrared signals, said devices being connected to a designated network and capable of communicating with each other, a receiving apparatus provided on the side of each of said plurality of devices in order to receive said infrared signals, wherein
of said devices, devices whose receiving apparatuses have received the same kind of infrared signal are grouped into the same group,
when any one of said infrared signals is received by the receiving apparatus provided in any one of said devices, data signifying said reception is held on the side of said device, and
when a prescribed operation is performed on any one of said devices by a user, said operated device notifies said plurality of devices that a device belonging to the same group as said operated device should be operated in collaboration with said operated device.

A sixth invention of the present invention (corresponding to claim 16) is a device grouping method of performing grouping of a plurality of devices by utilizing a plurality of distinguishable kinds of infrared signals, said devices being connected to a designated network and capable of communicating with each other, wherein
a plurality of receiving apparatuses of receiving said infrared signals are provided one on the side of each of said plurality of devices, and said method comprises a step in which, of said devices, devices whose receiving apparatuses have received the same kind of infrared signal are grouped into the same group.

A seventeenth invention of the present invention (corresponding to claim 17) is a program of causing a computer to execute the step of the device grouping method of the sixteenth invention of the present invention in which, of said plurality of devices each provided with a corresponding one of said plurality of receiving apparatuses in order to receive said infrared signals, devices whose receiving apparatuses have received the same kind of infrared signal are grouped into the same group.

An eighteenth invention of the present invention (corresponding to claim 18) is a computer processable medium holding thereon a program of causing a computer to execute the step of the device grouping method of the sixteenth invention of the present inveniton in which, of said plurality of devices each provided with a corresponding one of said plurality of receiving apparatuses in order to receive said infrared signals, devices whose receiving apparatuses have received the same kind of infrared signal are grouped into the same group.

### BRIEF DESCRIPTION OF THE DRAWINGS

Figure 1 is a schematic diagram showing a network management system according to a first embodiment of the present invention.
Figure 2 is a schematic diagram showing a network management system according to a fourth embodiment of the present invention.
Figure 3 is a block diagram showing a network management system according to a second embodiment of the present invention.
Figure 4 is a block diagram showing a network management system according to a third embodiment of the present invention.
Figure 5 is a block diagram showing a network management system according to a fifth embodiment of the present invention.
Figure 6 is a block diagram showing a network management system according to a sixth embodiment of the present invention.

### (DESCRIPTION OF REFERENCE NUMERALS)

101. INFRARED TRANSMITTING APPARATUS-a
102. TV-a INFRARED RECEIVER
103. VTR INFRARED RECEIVER
104. VTR
105. TV-a
106. FLUORESCENT LAMP-a
107. INFRARED TRANSMITTING APPARATUS-b
108. TV-b INFRARED RECEIVER
109. DVD INFRARED RECEIVER
110. DVD
111. TV-b
112. FLUORESCENT LAMP-b
113. DVD AMPLIFIER-b
114. DVD AMPLIFIER-a
115. COMPONENT SYSTEM
116. COMPONENT SYSTEM INFRARED RECEIVER
117. NETWORK

### BEST MODE FOR CARRYING OUT THE INVENTION

Embodiments according to the present invention will be described below with reference to the drawings.

### (Embodiment 1)

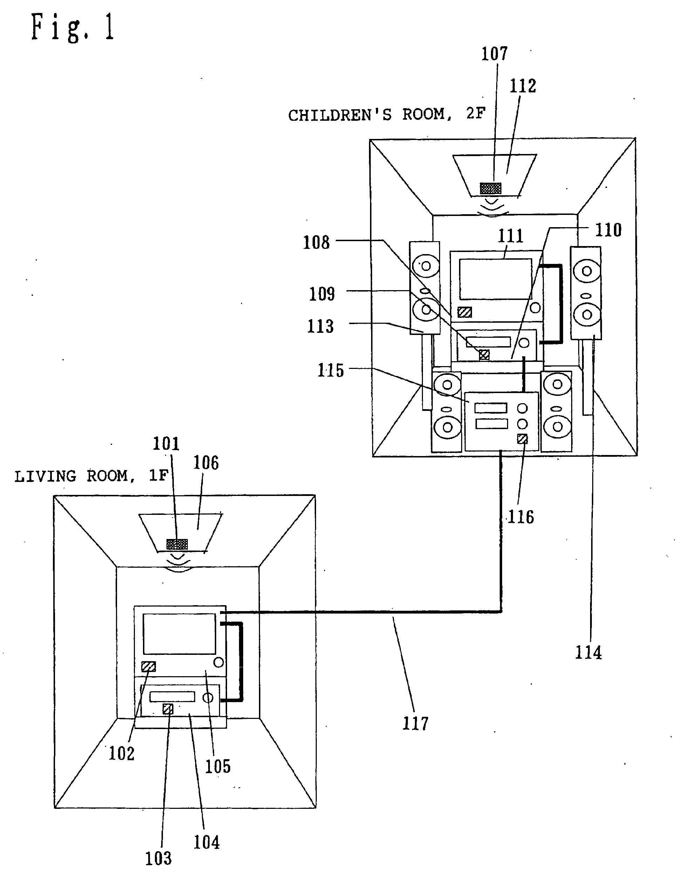

First, the configuration and operation of a network management system according to a first embodiment of the present invention will be described with reference to Figure 1 which is a schematic diagram showing the network management system of the first embodiment.

A VTR 104 equipped with a VTR infrared'receiver 103 (internal or external) and a TV-a 105 equipped with a TV-a infrared receiver 102 are located in a living room on the first floor, and a DVD 110 equipped with a DVD infrared receiver 109, a TV-b 111 equipped with a TV-b infrared receiver 108, and a component system 115 equipped with a component system infrared receiver 116 are located in a children's room on the second floor; in the living room on the first floor, an infrared transmitting apparatus-a 101 which transmits infrared light for grouping the devices in the living room is mounted together with a florescent lamp-a 106 for the room, while in the children's room on the second floor, an infrared transmitting apparatus-b 107 which transmits infrared light for grouping the devices in the children's room is mounted together with a florescent lamp-b 106 for the room (each infrared transmitting apparatus is mounted at or near the position of the fluorescent lamp for the room, not because the transmitting apparatus operates in collaboration with the fluorescent lamp, but because the transmitting apparatus so mounted can reliably radiate the infrared light throughout the room).

The network management system of this embodiment corresponds to the device grouping system of the present invention. The TVs, the VTR, the DVD, and the component system shown in this embodiment correspond to the devices of the present invention. The infrared receivers in this embodiment each correspond to the receiving apparatus of the present invention.

The devices on the first and second floors are connected to a network 117 and can communicate with each other by using the communication means provided in the respective devices, and these devices can be grouped on a room by room basis.

Each device is equipped with a receiver for receiving infrared light; this infrared receiver may be constructed to also function as a receiver for the remote control unit used to operate the device.

### (Embodiment 2)

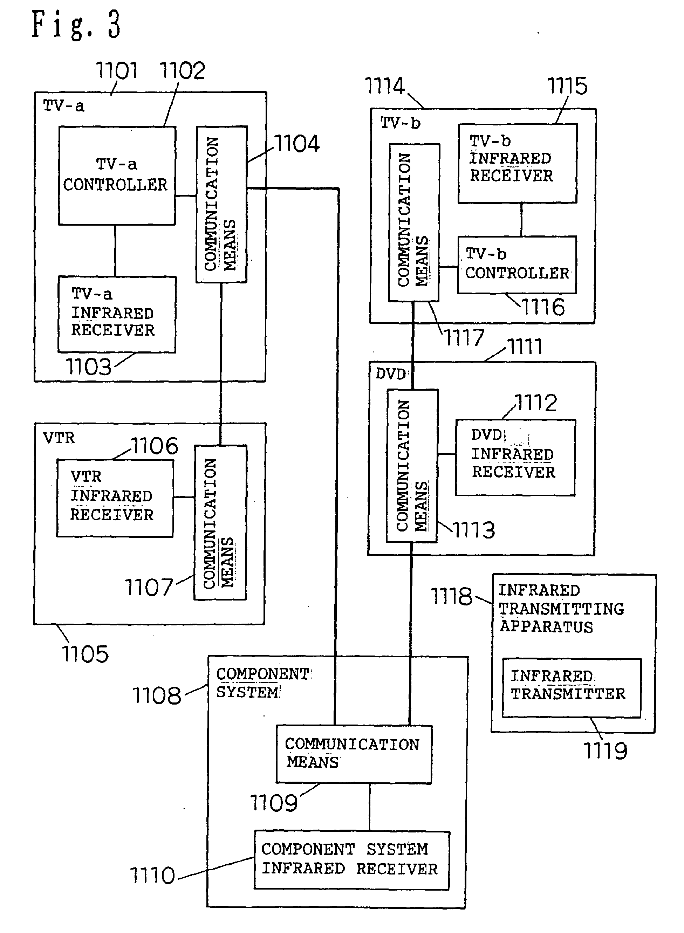

Next, the configuration of a network management system according to a second embodiment of the present invention will be described with reference to Figure 3 which is a block diagram showing the network management system of the second embodiment.

The network management system of the second embodiment is similar to the network management system of the foregoing first embodiment.

In the present embodiment, however, a TV-a 1101 and a VTR 1105 are located in the living room on the first floor that has an infrared transmitting apparatus 1118 mounted together with a fluorescent lamp, and a TV-b 1114, a DVD 1111, and a component system 1108 are located in the children's room on the second floor that has another infrared transmitting apparatus 1118 mounted together with a fluorescent lamp.

The TV-a 1101, the TV-b 1114, the VTR 1105, the DVD 1111, and the component system 1108 are each equipped with an infrared receiver, and these devices are divided into controlled (managed) devices and controlling devices.

Here, the function that each controlling device has in order to control the controlled devices is called the controller. It is assumed here that the TV-a 1101 controls the TV-a 1101, the VTR 1105, the DVD 1111, and the component system 1108, and that the TV-b 1114 is operating independently; therefore, the controller 1102 for the TV-a 1101, the VTR 1105, the DVD 1111, and the component system 1108 resides on the TV-a 1101, and the controller 1116 for the TV-b 1114 resides on the TV-b 1114.

The controllers in this embodiment each correspond to the management apparatus of the present invention.

Next, the operation for grouping performed by the network management system of this embodiment will be described. While explaining the operation of the network management system of this embodiment, one embodiment of a device grouping method according to the present invention will also be described.

The VTR 1105 and the TV-a 1101 each receive a signal 1 from the infrared transmitting apparatus 1118 in the living room on the first floor, and the DVD 1111, the component system 1108, and the TV-b 1114 each receive a signal 2 from the infrared transmitting apparatus 1118 in the children's room on the second floor.

In the present embodiment, the signals 1 and 2 are transmitted constantly (of course, the signals may be transmitted periodically at predetermined intervals of time, or in accordance with the user's manual operation).

The signals received by the respective devices are sent to the respective controllers, and the group that received the signal 1 is classified as group 1, while the group that received the signal 2 is classified as group 2.

Then, the controlling device, using the controller and communication means, makes an inquiry about the kind of the signal and collects information about any other device that is not controlled by that controlling device.

Suppose here that the TV-a 1101 examines the grouping status; since the identification information for the TV-a 1101, the VTR 1105, the DVD 1111, and the component system 1108 is under the control of the TV-a 1101, the TV-a 1101 makes an inquiry about the remaining device, i.e., the TV-b 1114.

Here, the devices that received the signal 1 are the VTR 1105 and the TV-a 1101, and the devices that received the signal 2 are the DVD 1111, the component system 1108, and the TV-b 1114; as a result, the VTR 1105 and the TV-a 1101 are classified as group 1, while the DVD 1111, the component system 1108, and the TV-b 1114 are classified as group 2.

The function for grouping the devices on a room by room basis provides the following effect.

Here, it is desired to set up the system so that, when the PLAY button of the DVD 1111 installed in the children's room on the second floor is pressed, power is automatically turned on to the TV-b 1114 and the component system 1108 in the same room, thus displaying the video from the DVD 1111 on the TV-b 1114 and producing sound from the TV-b 1114 as well as from the component system 1108.

To achieve this, in the present embodiment, provisions are made to be able to recognize and display that the DVD 1111, the component system 1108, and the TV-b 1114 belong to the same group.

That is, when the PLAY button of the DVD 1111 is pressed, the DVD 1111 sends a signal indicating that the PLAY button has been pressed to the device TV-a 1101 that controls the DVD 1111. Thereupon, the TV-a 1101 performs grouping by collecting the current infrared identification information of the TV-a 1101, the TV-b 1114, the VTR 1105, the DVD 1111, and the component system 1108 and, based on the result of the grouping, searches for a TV that is receiving the same signal as the infrared signal received by the DVD 1111 (that is, a TV that belongs to the same group).

In the above example, since the TV thus searched for is the TV-b 1114, the video is sent to the TV-b 1114 for display thereon. In this way, the video from the VTR can be displayed on the TV in the same room (that is, the children's room on the second floor) without the user having to input location information in advance.

Here, when the PLAY button of the DVD 1111 is pressed, a signal identifying the transmitting source of the infrared light may be sent to the TV-a 1101 together with the PLAY command. When this principle is applied, it becomes possible to automatically search for devices located in the same room and to produce sound from speakers incorporated in such devices as the TV-b 1114 and the component system 1108, without the user having to construct a sound system for the DVD 1111.

When the user presses the PLAY button of the DVD 1111, if the infrared light is blocked by the user's body and thus fails to reach the DVD 1111, the component system 1108, and the TV-b 1114, then it will be effective to use a storage device incorporated in the network management system. When the kind of the most recently received infrared signal and the time of reception are stored in the storage device, then even if the infrared signal fails to be received when the PLAY button is pressed, the TV-a 1101 can search for the TV and the component system 1108 located in the same room as the DVD 1111, based on the stored information.

As described above, according to the present embodiment, the devices on the network can be grouped without troubling the user. In particular, in this case, the devices can be grouped on a room by room basis. It is also possible to display a list of the devices by grouping the devices on the network, or to provide a service utilizing the above grouping.

### (Embodiment 3)

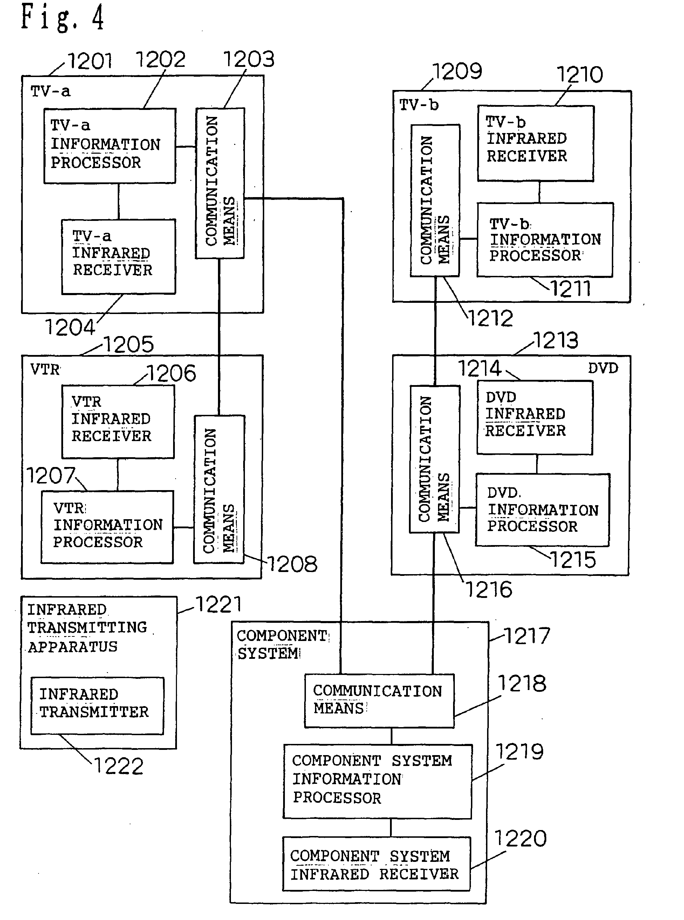

Next, the configuration of a network management system according to a third embodiment of the present invention will be described with reference to Figure 4 which is a block diagram showing the network management system of the third embodiment.

The network management system of the third embodiment is similar to the network management system of the first embodiment.

In the present embodiment, however, a TV-a 1201 and a VTR 1205 are located in the living room on the first floor that has an infrared transmitting apparatus 1221 mounted together with a fluorescent lamp, and a TV-b 1209, a DVD 1213, and a component system 1217 are located in the children's room on the second floor that has another infrared transmitting apparatus 1221 mounted together with a fluorescent lamp.

The TV-a 1201, the TV-b 1209, the VTR 1205, the DVD 1213, and the component system 1217 are each equipped with an infrared receiver; unlike the second embodiment described above, there are no controlling and controlled relationships among the devices, but each device has a function to control (manage) itself and includes an information processor for analyzing the status of the other devices. The infrared receiver of each device may be constructed to also function as a receiver for the remote control.

The information processor in this embodiment corresponds to the management apparatus of the present invention.

Next, the operation for grouping performed by the network management system of this embodiment will be described. While explaining the operation of the network management system of this embodiment, one embodiment of a device grouping method according to the present invention will also be described.

The VTR 1205 and the TV-a 1201 each receive a signal 1 from the infrared transmitting apparatus 1118a, and the DVD 1213, the component system 1217, and the TV-b 1209 each receive a signal 2 from the infrared transmitting apparatus 1118b.

The signals received by the respective devices are sent to the respective information processors, and the group that received the signal 1 is classified as group 1, while the group that received the signal 2 is classified as group 2.

For the other devices, an inquiry is made about the kind of the signal and information is collected by using the information processor.

Suppose here that the DVD 1213 examines the grouping status; since the identification information under control of the DVD 1213 is only that of the DVD 1213, the DVD 1213 makes an inquiry about the remaining devices, i.e., the VTR 1205, the component system 1217, the TV-a 1201, and the TV-b 1209, by using the DVD information processor 1215. Here, the devices that received the signal 1 are the VTR 1205 and the TV-a 1201, and the devices that received the signal 2 are the DVD 1213, the component system 1217, and the TV-b 1209; as a result, the VTR 1205 and the TV-a 1201 are classified as group 1, while the DVD 1213, the component system 1217, and the TV-b 1209 are classified as group 2.

The function for grouping the devices on a room by room basis provides the following effect.

Here, it is desired to set up the system so that, when the PLAY button of the DVD 1213 installed in the children's room on the second floor is pressed, power is automatically turned on to the TV-b 1209 in the same room and the video from the DVD 1213 is displayed on that TV.

To achieve this, in the present embodiment, provisions are made to be able to recognize and display that the DVD 1213, the component system 1217, and the TV-b 1209 belong to the same group.

First, the instant that the PLAY button of the DVD 1213 is pressed, the DVD 1213 sends the signal received by its infrared signal receiver to its information processor. Next, using the DVD information processor 1215, the DVD 1213 searches for a TV that is receiving the same signal as the infrared signal received by the DVD 1213. In the above example, since the TV thus searched for is the TV-b 1209, the video is sent to the TV-b 1209 for display thereon. In this way, the video from the VTR 1205 can be displayed on the TV in the same room without the user having to input location information in advance.

Here, when the PLAY button of the DVD 1213 is pressed, a signal identifying the transmitting source of the infrared light may be sent to the TV-a 1201 together with the PLAY command. When this principle is applied, it becomes possible to automatically search for devices located in the same room and to produce sound from speakers incorporated in such devices as the TV-b 1209 and the component system 1217, without the user having to construct a sound system for the DVD 1213.

When the user presses the PLAY button of the DVD, if the infrared light is blocked by the user's body and thus fails to reach the DVD, the component system, and the TV-b, then it will be effective to use the storage device as earlier described.

When the kind of the most recently received infrared signal and the time of reception are stored in the storage device, then even if the infrared signal fails to be received when the PLAY button is pressed, the TV located in the same room can be searched for by using the stored information.

As described above, according to the present embodiment, the devices on the network can be grouped without troubling the user. In particular, in this case, the devices can be grouped on a room by room basis. It is also possible to display a list of the devices by grouping the devices on the network, or to provide a service utilizing the above grouping.

### (Embodiment 4)

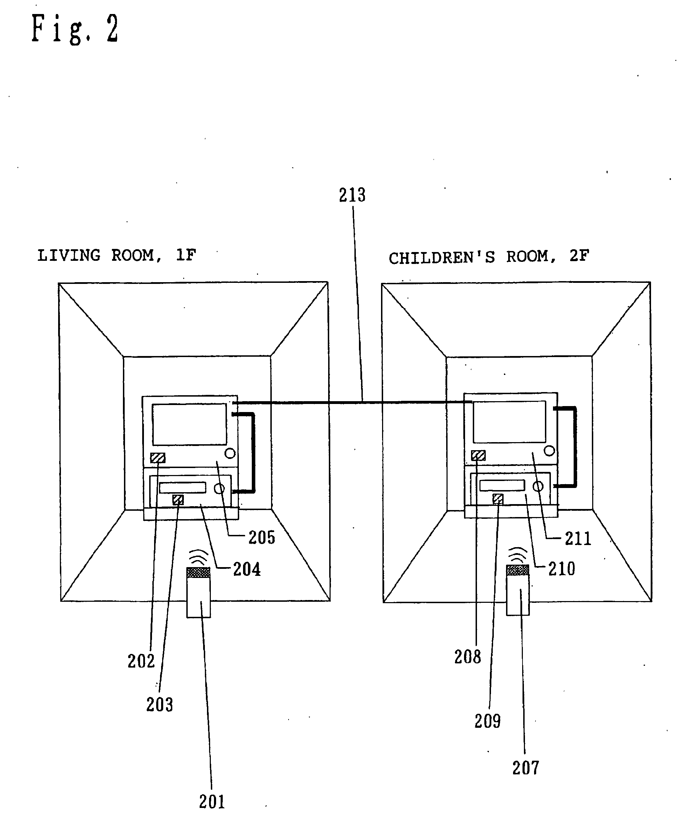

First, the configuration and operation of a network management system according to a fourth embodiment of the present invention will be described with reference to Figure 2 which is a schematic diagram showing the network management system of the fourth embodiment.

The configuration of the network management system of the fourth embodiment is substantially the same as that of the network management system of the previously described first embodiment, except that the infrared transmitting apparatus is not physically fixed, but is attached to a remote control unit that can be carried around by the user.

A VTR-a 204 and a TV-a 205 are located in the living room on the first floor, and a VTR-b 210 and a TV-b 211 are located in the children's room on the second floor. The VTRs and TVs on the first and second floors are connected to a network, and can communicate with each other by using the communication means provided in the respective devices.

Each device is equipped with a receiver for receiving infrared light; this infrared receiver may be constructed to also function as a receiver for the remote control unit.

### (Embodiment 5)

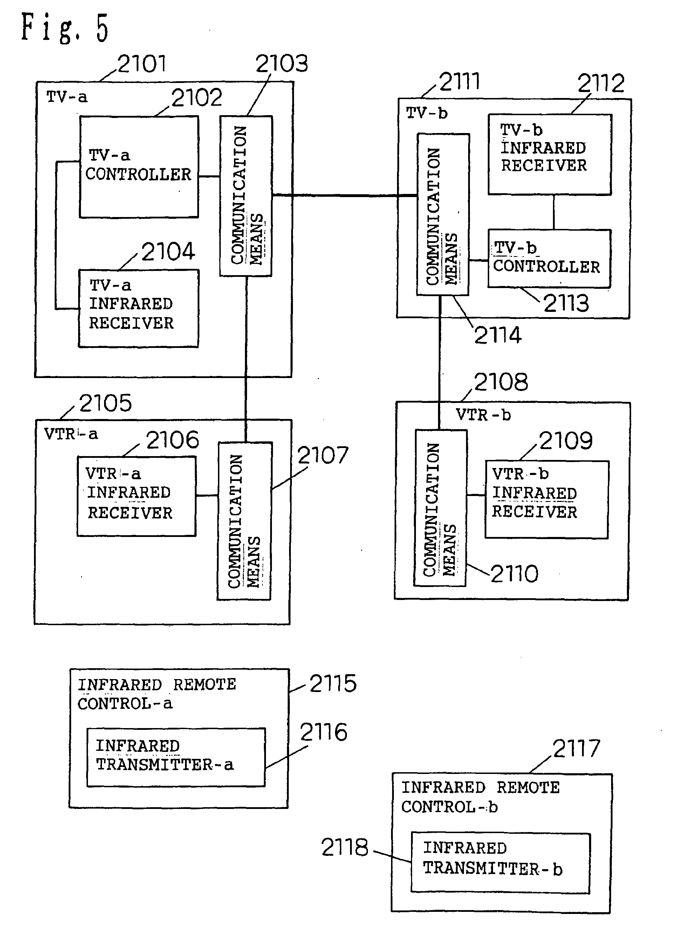

Next, the configuration of a network management system according to a fifth embodiment of the present invention will be described with reference to Figure 5 which is a block diagram showing the network management system of the fifth embodiment.

The network management system of the fifth embodiment is similar to the network management system of the foregoing fourth embodiment.

In the present embodiment, however, a TV-a 2101 and a VTR-a 2105 are located in the living room on the first floor, and a VTR-b 2108 and a TV-b 2111 are located in the children's room on the second floor.

Next, the operation for grouping performed by the network management system of this embodiment will be described. While explaining the operation of the network management system of this embodiment, one embodiment of a device grouping method according to the present invention will also be described.

The TV-a 2101, the VTR-a 2105, the VTR-b 2108, and the TV-b 2111 are each equipped with an infrared receiver, and these devices are divided into controlled devices and controlling devices. Here, the function that each controlling device has in order to control the controlled devices is called the controller. It is assumed here that the TV-a 2101 controls the TV-a 2101, the VTR-a 2105, and the VTR-b 2108, and that the TV-b 2111 is operating independently; therefore, the controller for the TV-a 2101, the VTR-a 2105, and the VTR-b 2108 resides on the TV-a 2101, and the controller for the TV-b 2111 resides on the TV-b 2111.

When a TV and a VTR are installed in the same room, the TV and the VTR are usually placed near each other, for example, the TV on the television stand and the VTR inside the television stand. As a result, it is often the case that the infrared signal transmitted toward the VTR also reaches the TV. When the infrared signal transmitted toward the VTR reaches the TV, the signal, if irrelevant to TV operation, is discarded, but in this embodiment, this signal is used and the devices that received the signal transmitted from the same infrared remote control are grouped into the same group.

More specifically, the VTR-a 2105 and the TV-a 2101 receive the signal 1 from the infrared remote control-a 2115, and the VTR-b 2108 and the TV-b 2111 receive the signal 2 from the infrared remote control 2117b (infrared light has high directionality and is suitable for signal transmission directed toward a particular target).

The signals received by the respective devices are sent to the respective controllers, and the group that received the signal 1 is classified as group 1, while the group that received the signal 2 is classified as group 2. The controlling device, using the communication means, makes an inquiry about the kind of the signal and collects information about any other device that is not controlled by that controlling device.

Suppose here that the TV-a 2101 examines the grouping status; since the identification information for the TV-a 2101, the VTR-a 2105, and the VTR-b 2108 is under the control of the TV-a 2101, the TV-a 2101 makes an inquiry about the remaining device, i.e., the TV-b 2111 by using the communication means 2103.

Here, the devices that received the signal 1 are the VTR-a 2105 and the TV-a 2101, and the devices that received the signal 2 are the VTR-b 2108 and the TV-b 2111; as a result, the VTR-a 2105 and the TV-a 2101 are classified as group 1, and the VTR-b 2108 and the TV-b 2111 as group 2.

The function for grouping the nearby devices provides the following effect.

Here, it is desired to set up the system so that, when the PLAY button of the VTR-b 2108 installed in the children's room on the second floor is'pressed, power is automatically turned on to the TV-b 2111 in the same room and the video from the VTR-b 2108 is displayed on that TV.

To achieve this, in the present embodiment, provisions are made to be able to recognize and display that the VTR-b 2108 and the TV-b 2111 belong to the same group.

That is, when the remote control (this may be the remote control unit used for operating the VTR-b 2108, which is different from the earlier mentioned infrared remote control-a 2115 or remote control-b 2117) is operated to play the VTR-b 2108, a signal identifying the transmitting source of the infrared light is transmitted from the remote control together with the PLAY command.

The VTR-b 2108 sends a command indicating that the PLAY button has been pressed to the device TV-a 2101 that controls the VTR-b 2108. Thereupon, the TV-a 2101 performs grouping by collecting the current infrared identification information of the TV-a 2101, the TV-b 2111, the VTR-a 2105, and the VTR-b 2108 and, based on the result of the grouping, searches for a TV that is receiving the same signal as the infrared signal received by the VTR-b 2108 (that is, a TV that belongs to the same group).

In the above example, since the TV thus searched for is the TV-b 2111, the video is sent to the TV-b 2111 for display thereon. In this way, the video from the VTR-b 2108 can be displayed on the TV-b 2111 in the same room without the user having to input location information in advance. Here, when the PLAY button of the VTR-b 2108 is pressed, the signal identifying the transmitting source of the infrared light may be sent to the TV-a 2101 together with the PLAY command.

When the PLAY command for the VTR-b 2108 is transmitted from the remote control, if the infrared light fails to reach the VTR-b 2108 and the TV-b 2111 because the infrared receivers of the VTR-b 2108 and the TV-b 2111 are spaced some distance away from each other or because the main units of the VTR-b 2108 and the TV-b 2111 are spaced some distance away from each other, then it will be effective to use the storage device as earlier described. When the kind of the most recently received infrared signal and the time of reception are stored in the storage device, then even if the infrared signal fails to be received when the PLAY button is pressed, the TV located in the same room can be searched for by using the stored information.

Further, if, in future, each individual person comes to carry a remote control device of his or her own, not a remote control device special for each device, there can occur cases where the person uses his or her own remote control device in different rooms at a time. A mobile telephone combined with a remote control function is an example. In such cases, when video is displayed on the wrong TV, the person may be expected to make a correction by manual operation. In view of this, a history of display status and a history of corrections are stored in a storage device incorporated in the apparatus to learn the correct combination for use.

For example, when the VTR in this room is operated immediately after operating the TV in the next room by the remote control, there is a high probability that the video will erroneously be displayed on the TV in the next room. If the video is erroneously displayed, the video is stopped first, and then power is turned on to the TV in this room, and the video from the VTR is displayed from its menu.

In this way, even if the person uses the remote control in different room at a time, the video from the VTR can be displayed on the correct TV. Further., when the TV is turned on by the person's remote control, the menu special for that person can be displayed to preferentially present a list of device groupings.

As described above, according to the present embodiment, the devices on the network can be grouped without troubling the user. In particular, in this case, the devices can be grouped on a room by room basis. It is also possible to display a list of the devices by grouping the devices on the network, or to provide a service utilizing the above grouping.

### (Embodiment 6)

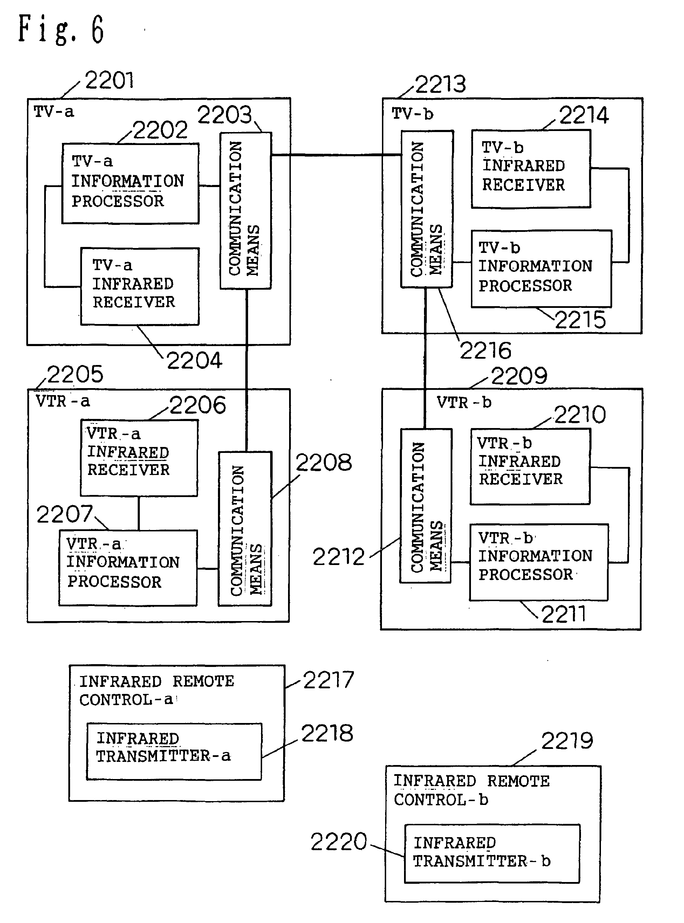

Next, the configuration of a network management system according to a sixth embodiment of the present invention will be described with reference to Figure 6 which is a block diagram showing the network management system of the sixth embodiment.

The network management system of the sixth embodiment is similar to the network management system of the fourth embodiment.

In the present embodiment, however, a TV-a 2201 and a VTR-a 2205 are located in the living room on the first floor, and a VTR-b 2213 and a TV-b 2209 are located in the children's room on the second floor.

Next, the operation for grouping performed by the network management system of this embodiment will be described. While explaining the operation of the network management system of this embodiment, one embodiment of a device grouping method according to the present invention will also be described.

The TV-a 2201, the TV-b 2213, the VTR-a 2205, and the VTR-b 2209 are each equipped with an infrared receiver; unlike the fifth embodiment described above, there are no controlling and controlled relationships among the devices,
but each device has a function to control itself and includes an information processor for analyzing the status of the other devices. The infrared receiver of each device is constructed to also function as a receiver for the remote control.

Next, the operation for grouping performed by the network management system of this embodiment will be described below.

The VTR-a 2205 and the TV-a 2201 each receive the signal 1 from the infrared remote control-a 2217, and the VTR-b 2209 and the TV-b 2213 each receive the signal 2 from the infrared remote control-b 2219.

The signals received by the respective devices are sent to the respective information processors, and the group that received the signal 1 is classified as group 1, while the group that received the signal 2 is classified as group 2. For the other devices, an inquiry is made about the kind of the signal and information is collected by using the information processor.

Suppose here that the VTR-b 2209 examines the grouping status; since the identification information under control of the VTR-b 2209 is only that of the VTR-b 2209, the VTR-b 2209 makes an inquiry about the remaining devices, i.e., the VTR-a 2205, the VTR-b 2209, and the TV-b 2213, by using the VTR-b information processor 2211. Here, the devices that received the signal 1 are the VTR-a 2205 and the TV-a 2201, and the devices that received the signal 2 are the VTR-b 2209 and the TV-b 2213; as a result, the VTR-a 2205 and the TV-a 2201 are classified as group 1, and the VTR-b 2209 and the TV-b 2213 as group 2.

The function for grouping the nearby devices provides the following effect.

Here, it is desired to set up the system so that, when the PLAY button of the VTR-b 2209 installed in the children's room on the second floor is pressed, power is automatically turned on to the TV-b 2213 in the same room and the video from the VTR-b 2209 is displayed on that TV.

To achieve this, in the present embodiment, provisions are made to be able to recognize and display that the VTR-b 2209 and the TV-b 2213 belong to the same group.

First, when the remote control is operated to play the VTR-b 2209, a signal identifying the transmitting source of the infrared light is transmitted from the remote control together with the PLAY command. Of the signals received by the infrared signal receiver, the VTR-b 2209 sends the signal identifying the transmitting source of the infrared light to its information processor. Thereupon, the VTR-b 2209, using the VTR-b information processor 2211, searches for a TV that is receiving the same signal as the received infrared signal. In the above example, since the TV thus searched for is the TV-b 2213, the video is sent to the TV-b 2213 for display thereon. In this way, the video from the VTR can be displayed on the TV in the same room without the user having to input location information in advance.

Here, when the PLAY button of the VTR-b 2209 is pressed, the signal identifying the transmitting source of the infrared light may be sent to the TV-a 2201 together with the PLAY command.

When the PLAY command for the VTR-b 2209 is transmitted from the remote control, if the infrared light fails to reach the VTR-b 2209 and the TV-b 2213 because the infrared receivers of the VTR-b 2209 and the TV-b 2213 are spaced some distance away from each other or because the main units of the VTR-b 2209 and the TV-b 2213 are spaced some distance away from each other, then it will be effective to use the storage device as earlier described. When the kind of the most recently received infrared signal and the time of reception are stored in the storage device, then even if the infrared signal fails to be received when the PLAY button is pressed, the TV located in the same room can be searched for by using the stored information.

Further, if, in future, each individual person comes to carry a remote control device of his or her own, not a remote control device special for each device, there can occur cases where the person uses his or her own remote control device in different rooms at a time. A mobile telephone combined with a remote control function is an example. In such cases, when video is displayed on the wrong TV, the person may be expected to make a correction by manual operation. In view of this, a history of display status and'a history of corrections are stored in a storage device incorporated in the apparatus to learn the correct combination for use.

For example, when the VTR in this room is operated immediately after operating the TV in the next room by the remote control, there is a high probability that the video will erroneously be displayed on the TV in the next room. If the video is erroneously displayed, the user stops the video first, and then turns power on to the TV in this room, and the video from the VTR is displayed from its menu.

When the history of display status and the history of corrections made by the user are stored in the apparatus as described above, if the same thing occurs next, the video can be displayed correctly based on the stored histories.

As described above, according to the present embodiment, the devices on the network can be grouped without troubling the user. In particular, in this case, the devices can be grouped on a room by room basis. It is also possible to display a list of the devices by grouping the devices on the network, or to provide a service utilizing the above grouping.

The first to sixth embodiments have been described in detail above.

To summarize, the present invention concerns a device grouping system which, by utilizing a plurality of distinguishable kinds of infrared signals, performs grouping of a plurality of devices connected to a designated network and capable of communicating with each other, wherein a plurality of receiving apparatuses of receiving the infrared signals are provided one for each of the plurality of devices and, of the devices, devices whose receiving apparatuses have received the same kind of infrared signal are grouped into the same group.

In one preferred mode, one or more management apparatuses of managing the devices are each provided in a designated one of the plurality of devices, and when any one of the infrared signals is received by the receiving apparatus provided in any one of the devices, data signifying the reception is sent to and held in the management apparatus responsible for managing the device. More specifically, when a prescribed operation is performed on any one of the devices by a user, a notification signifying the operation performed is sent to the management apparatus responsible for managing the device, and the notified management apparatus, based on the thus sent and held data, notifies a designated one of the management apparatuses and/or a designated one of the devices that a device belonging to the same group as the device on which the prescribed operation has been performed should be operated in collaboration.

In another preferred mode, when any one of the infrared signals is received by the receiving apparatus provided in any one of the devices, data signifying the reception is held in the device. More specifically, (a) one or more management apparatuses of managing the devices are each provided in a designated one of the plurality of devices, and when a prescribed operation is performed on any one of the devices by a user, a notification signifying the operation performed is sent, together with the held data, to the management apparatus responsible for managing the device, and the notified management apparatus, based on the thus sent data, notifies a designated one of the management apparatuses and/or a designated one of the devices that a device belonging to the same group as the device on which the prescribed operation has been performed should be operated in collaboration, or (b) when a prescribed operation is performed on any one of the devices by a user, the operated device notifies the plurality of devices that a device belonging to the same group as the operated device should be operated in collaboration with the operated device.

The invention includes a program for causing a computer to carry out the functions of all or part of the means (or devices, elements, circuits, blocks, etc.) of the device grouping system, the receiving apparatus, and the management apparatus of the invention described above, wherein the program operates in collaboration with the computer. Of course, the computer here is not limited to pure hardware such as a CPU, but may further include firmware, an OS, or even a peripheral device.

The invention also includes a program for causing a computer to carry out the operations in all or part of the steps (or processes, operations, effects, etc.) of the device grouping method of the invention described above, wherein the program operates in collaboration with the computer.

Here, part of the means (or devices, elements, circuits, blocks, etc.) of the invention and part of the steps (or processes, operations, effects, etc.) of the invention refer to some of the plurality of means or steps, or some of the functions or operations in one of the means or steps.

Further, some of the devices (or elements, circuits, blocks, etc.) of the invention refer to some of the plurality of devices, or some of the means (or elements, circuits, blocks, etc.) in one of the devices, or some of the functions in one of the means.

A computer readable recording medium with the program of the invention recorded thereon is also included in the present invention. In one utilization mode of the program of the invention, the program is recorded on a recording medium readable by a computer, and is operated in collaboration with the computer. In another utilization mode of the program of the invention, the program is transmitted through a transmission medium, is read by a computer, and is operated in collaboration with the computer. The recording medium includes a ROM or the like, and the transmission medium includes a transmission medium such as the Internet, light waves, radio waves, or sound waves.

The configuration of the invention may be implemented in software or in hardware.

The invention also includes a medium having a program recorded thereon for causing a computer to carry out all or some of the functions of all or some of the means of the device grouping system, the receiving apparatus, and the management apparatus of the invention described above, wherein the program readable by the computer is read by the computer and carries out the functions in collaboration with the computer.

The invention further includes a medium having a program recorded thereon for causing a computer to carry out all or some of the operations in all or some of the steps of the device grouping method of the invention described above, wherein the program readable by the computer is read by the computer and carries out the operations in collaboration with the computer.

In this way, the present invention is characterized by the provision of network management apparatuses each comprising, for example, an infrared receiver capable of receiving an infrared identification signal and a communication means of performing communications via a connected network, and is characterized in that when identification signals transmitted from infrared transmitters of one or more external infrared transmitting apparatuses are respectively received by the plurality of network management apparatuses connected to the network, the plurality of network management apparatuses that received the infrared light carrying the same identification signal are classified into the same group.

According to the invention, grouping of the devices provided with the network management apparatuses can be automatically performed using the signals contained in the infrared light. Using the infrared light, it also becomes possible to provide a mechanism that enables each device to automatically acquire the location information of any other device connected to the network.

When more than one infrared transmitting apparatus is installed in the same room, various methods of use can be devised by setting the identification signals in various ways. For example, when the infrared transmitting apparatuses are set to transmit mutually different identification signals, more precise grouping can be performed based on the location relationships of the devices, since each device receives a different identification number even when the devices are installed in the same room. Conversely, when all the infrared transmitting apparatuses are set to transmit the same identification signal, the devices that received the same identification signal can be determined as being the devices located in the same room.

Further, when this method is employed, it is only necessary to set up devices, each equipped with a network management apparatus, and install an infrared transmitting apparatus; this serves to reduce the number of man-hours and ensures the provision of a highly realizable system. The devices to be grouped here are not hubs, repeaters, or home servers, but devices such as AV devices that are highly likely to be used under illumination with room light or controlled by remote control; as a result, only the desired devices can be efficiently grouped by excluding hubs and repeaters from the devices to be grouped.

The present invention is further characterized in that when the identification signals transmitted, for example, from the infrared transmitters of one or more physically fixed external infrared transmitting apparatuses are respectively received by the plurality of network management apparatuses connected to the network, the plurality of network management apparatuses are classified into the same group when the identification signal contained in the infrared light received by the plurality of network management apparatuses is the same as the identification signal contained in the infrared light received at the same time by a network management apparatus having the function of controlling the plurality of network management apparatuses.

According to the invention, a service utilizing the grouping function can be provided; for example, the network management apparatus having the function of controlling the plurality of network management apparatuses collects the identification signal information contained in the infrared light and presents a list of the devices classified by group.

The network management apparatus of the invention is characterized, for example, by the including of an information processor which determines, based on the information contained in the infrared light received by another one of the network management apparatuses, whether that other one of the network management apparatuses belongs to the same group as the network management apparatus by using the communication means of performing communications via the connected network, wherein when a corresponding one of the identification signals transmitted from the infrared transmitters of one or more physically fixed external infrared transmitting apparatuses is received, the network management apparatus searches for a network management apparatus belonging to the same group by using the communication means.

According to the invention, a service utilizing the grouping function can be provided; for example, when an audio system and speakers attached to it are located in the same room as the component system, the network management apparatus, using the information processor, searches for the speakers belonging to the same group as the component system so that sound can be produced from the speakers, without the human having to make specific settings.

The present invention is also characterized by the inclusion of a storing means which stores, for example, information contained in previously received infrared light and information concerning the grouping of the apparatus.

According to the invention, when.the infrared identification number is requested, if the infrared light fails to reach, data of the infrared identification number previously stored in the storing means can be used. In particular, if provisions are made to hold the identification number data in the network management apparatus only during the period that the device is connected to the network, the possibility of erroneously using the previous data, for example, when the device was moved to another room, can be eliminated, and an enhanced effect can thus be provided.

The present invention is also characterized by the inclusion of a storing means which stores, for example, information contained in previously received infrared light and information concerning the grouping of the apparatus, wherein the grouping information is learned using the storing means.

For example, when there are two infrared transmitting apparatuses in the same room, and two kinds of identification signals are received, there arises the problem of which identification signal should be used for grouping; according to the invention, the problem can be solved by performing the grouping reflecting the user's will by learning the user's frequency of use of the grouping and the frequency of correction from the storage device.

Further, for example, when there are two TVs and one VTR in a large room, and when only one identification signal is used, there arises the problem of on which TV the video from the VTR should be displayed; in this case also, the device on which the user always desires to display the video can be selected by learning the user's frequency of use of the grouping and the frequency of correction from the storage device.

The invention also concerns a grouping information notifying method for use in a network management apparatus equipped with a communication means of performing communications via a connected network, wherein when an inquiry request inquiring about information concerning installed location is received by the communication means, information contained in the infrared light is acquired from the infrared receiver, and the information is sent back to the inquiring network management apparatus.

The present invention is characterized by the use of a storing means which stores, for example, information concerning the grouping of the apparatus, wherein when the inquiry request inquiring about the information concerning the installed location is received by the communication means, if the infrared light is not transmitted yet from the infrared transmitter, information contained in the previously received infrared light is retrieved from the storing means, and the retrieved information is sent back to the inquiring network management apparatus.

The present invention is also characterized in that when the identification signals transmitted, for example, from the infrared transmitters of one or more movable infrared transmitting apparatuses are respectively received by the plurality of network management apparatuses connected to the network, the plurality of network management apparatuses are classified into the same group when the identification signal contained in the infrared light received by the plurality of network management apparatuses is the same as the identification signal contained in the infrared light received within a certain period of time by a network management apparatus having the function of controlling the plurality of network management apparatuses.

According to the invention, devices located within the range of the infrared light of a remote control can be grouped into the same group. Further, a service utilizing the grouping function can be provided; for example, the network management apparatus having the function of controlling the plurality of network management apparatuses collects the identification signal information contained in the infrared light and presents a list of the devices classified by group.

The network management apparatus of the invention is characterized, for example, by the including of an information processor which determines, based on the information contained in the infrared light received by another one of the network management apparatuses, whether that other one of the network management apparatuses belongs to the same group by using the communication means of performing communications via the connected network, wherein when a corresponding one of the identification signals transmitted from the infrared transmitters of one or more movable infrared transmitting apparatuses is received, the network management apparatus searches for a network management apparatus belonging to the same group by using the communication means.

The present invention is also characterized by the inclusion of a storing means which stores, for example, information contained in previously received infrared light and information concerning the grouping of the apparatus.

According to the invention, when the infrared identification number is requested, if the infrared light fails to reach, data of the infrared identification number previously stored in the storing means can be used. In particular, if provisions are made to hold the identification number data in the network management apparatus only during the period that the device is connected to the network, the possibility of erroneously using the previous data, for example, when the device was moved to another room, can be eliminated, and an enhanced effect can thus be provided.

The network management apparatus of the invention is also characterized by the inclusion of a storing means which stores, for example, information contained in previously received infrared light and information concerning the grouping of the apparatus, wherein the grouping information is learned using the storing means.

According to the invention, it becomes possible to learn the correct combination of grouping by analyzing the history of device connections and history of corrections recorded in the storage device.

Further, as a service utilizing the grouping, it becomes possible, for example, to display frequently used device combinations in a personal menu via a GUI for operating the device.

### INDUSTRIAL APPLICABILITY

As is apparent from the above description, the present invention has the advantage of being able to automatically perform device grouping based on the physical location relationships of the devices connected to a network using IEEE 1394 or the like.

## Claims

1. A device grouping system of performing grouping of a plurality of devices by utilizing a plurality of distinguishable kinds of infrared signals, said devices being connected to a designated network and capable of communicating with each other, wherein
a plurality of receiving apparatuses of receiving said infrared signals are provided one on the side of each of said plurality of devices, and
of said devices, devices whose receiving apparatuses have received the same kind of infrared signal are grouped into the same group.

2. A device grouping system as set forth in claim 1, wherein said plurality of kinds of infrared signals are each transmitted constantly or periodically from a designated infrared signal transmitting apparatus installed in a designated space within a building.

3. A device grouping system as set forth in claim 1, wherein said plurality of kinds of infrared signals are each transmitted, under user instruction, from a designated infrared signal transmitting apparatus carried by a user.

4. A device grouping system as set forth in claim 1, wherein
one or more management apparatuses of managing said devices are each provided on the side of a designated one of said plurality of devices, and
when any one of said infrared signals is received by the receiving apparatus provided in any one of said devices, data signifying said reception is sent and held on the side of the management apparatus responsible for managing said device.

5. A device grouping system as set forth in claim 4, wherein
when a prescribed operation is performed on any one of said devices by a user, a notification signifying said operation performed is sent to the management apparatus responsible for managing said device, and
said notified management apparatus, based on said sent and held data, notifies a designated one of said management apparatuses and/or a designated one of said devices that a device belonging to the same group as said device on which said prescribed operation has been performed should be operated in collaboration.

6. A device grouping system as set forth in claim 1, wherein when any one of said infrared signals is received by the receiving apparatus provided in any one of said devices, data signifying said reception is held on the side of said device.

7. A device grouping system as set forth in claim 6, wherein
one or more management apparatuses of managing said devices are each provided on the side of a designated one of said plurality of devices,
when a prescribed operation is performed on any one of said devices by a user, a notification signifying said operation performed is sent, together with said held data, to the management apparatus responsible for managing said device, and
said notified management apparatus, based on said sent data, notifies a designated one of said management apparatuses and/or a designated one of said devices that a device belonging to the same group as said device on which said prescribed operation has been performed should be operated in collaboration.

8. A device grouping system as set forth in claim 6, wherein when a prescribed operation is performed on any one of said devices by a user, said operated device notifies said plurality of devices that a device belonging to the same group as said operated device should be operated in collaboration with said operated device.

9. A device grouping system as set forth in claim 1, comprising a storage device of storing a history of reception of said infrared signals.

10. A device grouping system as set forth in claim 9, having a function of learning based on said stored history.

11. In a system of performing grouping of a plurality of devices by utilizing a plurality of distinguishable kinds of infrared signals, said devices being connected to a designated network and capable of communicating with each other, a receiving apparatus provided on the side of each of said plurality of devices in order to receive said infrared signals, wherein
of said devices, devices whose receiving apparatuses have received the same kind of infrared signal are grouped into the same group,
when any one of said infrared signals is received by the receiving apparatus provided in any one of said devices, data signifying said reception is sent and held on the side of one or more management apparatuses each provided on the side of a designated one of said plurality of devices in order to manage said devices, and
when a prescribed operation is performed on any one of said devices by a user, a notification signifying said operation performed is sent to the management apparatus responsible for managing said device, and said notified management apparatus, based on said sent and held data, notifies a designated one of said management apparatuses and/or a designated one of said devices that a device belonging to the same group as said device on which said prescribed operation has been performed should be operated in collaboration.

12. In a system of performing grouping of a plurality of devices by utilizing a plurality of distinguishable kinds of infrared signals, said devices being connected to a designated network and capable of communicating with each other, a management apparatus provided on the side of a designated one of said plurality of devices, wherein
a plurality of receiving apparatuses of receiving said infrared signals are provided one on the side of each of said plurality of devices and, of said devices, devices whose receiving apparatuses have received the same kind of infrared signal are grouped into the same group,
when any one of said infrared signals is received by the receiving apparatus provided in any one of said devices, data signifying said reception is sent and held on the side of the management apparatus responsible for managing said device, and
when a prescribed operation is performed on any one of said devices by a user, a notification signifying said operation performed is sent to the management apparatus responsible for managing said device, and said notified management apparatus, based on said sent and held data, notifies a designated one of said management apparatuses and/or a designated one of said devices that a device belonging to the same group as said device on which said prescribed operation has been performed should be operated in collaboration.

13. In a system of performing grouping of a plurality of devices by utilizing a plurality of distinguishable kinds of infrared signals, said devices being connected to a designated network and capable of communicating with each other, a receiving apparatus provided on the side of each of said plurality of devices in order to receive said infrared signals, wherein
of said devices, devices whose receiving apparatuses have received the same kind of infrared signal are grouped into the same group,
when any one of said infrared signals is received by the receiving apparatus provided in any one of said devices, data signifying said reception is held on the side of said device, and
when a prescribed operation is performed on any one of said devices by a user, a notification signifying said operation performed is sent, together with said held data, to a management apparatus responsible for managing said device among one or more management apparatuses each provided on the side of a designated one of said plurality of devices in order to manage said devices, and said notified management apparatus, based on said sent data, notifies a designated one of said management apparatuses and/or a designated one of said devices that a device belonging to the same group as said device on which said prescribed operation has been performed should be operated in collaboration.

14. In a system of performing grouping of a plurality of devices by utilizing a plurality of distinguishable kinds of infrared signals, said devices being connected to a designated network and capable of communicating with each other, a management apparatus provided on the side of a designated one of said plurality of devices, wherein
a plurality of receiving apparatuses of receiving said infrared signals are provided one on the side of each of said plurality of devices and, of said devices, devices whose receiving apparatuses have received the same kind of infrared signal are grouped into the same group,
when any one of said infrared signals is received by the receiving apparatus provided in any one of said devices, data signifying said reception is held on the side of said device, and
when a prescribed operation is performed on any one of said devices by a user, a notification signifying said operation performed is sent, together with said held data, to a management apparatus responsible for managing said device among one or more management apparatuses each provided on the side of a designated one of said plurality of devices in order to manage said devices, and said notified management apparatus, based on said sent data, notifies a designated one of said management apparatuses and/or a designated one of said devices that a device belonging to the same group as said device on which said prescribed operation has been performed should be operated in collaboration.

15. In a system of performing grouping of a plurality of devices by utilizing a plurality of distinguishable kinds of infrared signals, said devices being connected to a designated network and capable of communicating with each other, a receiving apparatus provided on the side of each of said plurality of devices in order to receive said infrared signals, wherein
of said devices, devices whose receiving apparatuses have received the same kind of infrared signal are grouped into the same group,
when any one of said infrared signals is received by the receiving apparatus provided in any one of said devices, data signifying said reception is held on the side of said device, and
when a prescribed operation is performed on any one of said devices by a user, said operated device notifies said plurality of devices that a device belonging to the same group as said operated device should be operated in collaboration with said operated device.

16. A device grouping method of performing grouping of a plurality of devices by utilizing a plurality of distinguishable kinds of infrared signals, said devices being connected to a designated network and capable of communicating with each other, wherein
a plurality of receiving apparatuses of receiving said infrared signals are provided one on the side of each of said plurality of devices, and said method comprises a step in which, of said devices, devices whose receiving apparatuses have received the same kind of infrared signal are grouped into the same group.

17. A program of causing a computer to execute the step of the device grouping method of claim 16 in which, of said plurality of devices each provided with a corresponding one of said plurality of receiving apparatuses in order to receive said infrared signals, devices whose receiving apparatuses have received the same kind of infrared signal are grouped into the same group.

18. A computer processable medium holding thereon a program of causing a computer to execute the step of the device grouping method of claim 16 in which, of said plurality of devices each provided with a corresponding one of said plurality of receiving apparatuses in order to receive said infrared signals, devices whose receiving apparatuses have received the same kind of infrared signal are grouped into the same group.
